# DEMANDE DE BREVET EUROPEEN

(11) **EP 0 913 362 A1**
(43) Date de publication de la demande: **06.05.1999**
(21) Numéro de dépôt: 98870211.4
(22) Date de dépôt: 15.10.1998
(51) Int. Cl.: C02F 3/20, C02F 3/00, C02F 3/12

(54) **Station d'épuration d'eau**

(30) Priorité: 17.10.1997 BE 9700826
(71) Demandeur: Platiau, Baudouin, 4980 Trois-Ponts (BE)
(72) Inventeur: Platiau, Baudouin, 4980 Trois-Ponts (BE)
(74) Mandataire: Vanderperre, Robert

(57) **Abrégé**

Une station d'épuration comportant un réacteur (10) comprenant une cuve (11) dans laquelle les eaux sont mises en contact avec une masse bactérienne. La cuve (11) comprend une cloison (13) délimitant une zone d'aération (12), une zone de recirculation par effet vortex (14) et une zone de décantation (16), et des moyens (15, 17) pour injecter périodiquement de l'air dans la zone d'aération précitée afin de mettre la masse bactérienne en suspension, de manière à favoriser le développement de la flore bactérienne.

## Description

La présente invention se rapporte au domaine de l'assainissement des eaux et elle concerne plus particulièrement une station d'épuration d'eau.

Le problème de l'épuration des eaux usées, eaux résiduaires et eaux de surface polluées, notamment, est certes une des préoccupations visant à la sauvegarde de l'environnement. Les procédés d'épuration des eaux consistent en un traitement des eaux afin de dégrader ou transformer les déchets qui polluent les eaux en vue d'améliorer les biodégradations. Ces procédés produisent des boues qu'il est nécessaire de faire recirculer en vue de leur recyclage. Ceci entraîne une maintenance souvent lourde et coûteuse ainsi qu'une vidange régulière de la station d'épuration.

En raison de cette maintenance lourde et du coût élevé qui en résulte, les stations d'épuration sont difficilement à la portée des collectivités de moyenne et de petite importance, et notamment les collectivités en zone rurale.

Le but de la présente invention est d'éviter les inconvénients des stations d'épuration connues. A cet effet, il est proposé une station d'épuration dans laquelle les eaux sont mises en contact avec une masse bactérienne, la cuve comprenant une cloison qui délimite une zone d'aération, une zone de recirculation par effet vortex et une zone de décantation, et de moyens pour injecter périodiquement de l'air dans la zone d'aération précitée afin de mettre la masse bactérienne en suspension, de manière à favoriser le développement de la flore bactérienne.

Le rôle des bactéries est de dégrader les matières organiques et les hydrocarbures, ce qui permet de réduire de manière significative le nombre de vidanges des boues. Le maintien en suspension de la masse bactérienne par l'injection d'air favorise le développement des micro-organismes qui utilisent la pollution biodégradable pour se multiplier, ce qui active et intensifie le processus de dégradation. La flore bactérienne se développe jusqu'à épuisement du milieu nutritif, c'est-à-dire des eaux usées et des matières organiques. La pollution retenue est d'autant plus grande que la masse bactérienne est élevée.

Le choix de la masse bactérienne permet de dégrader efficacement différents types de matières biodégradables contenues dans les effluents de toute nature : micro-organismes, hydrocarbures, graisses, détergents, etc.

Pour mettre ce procédé en oeuvre, l'invention propose une station d'épuration comprenant un bioréacteur dans lequel les eaux usées sont mises en contact avec une masse bactérienne, ledit réacteur comprenant une zone d'activation entourée d'une zone de décantation dont elle est séparée par une cloison, la zone d'activation comprenant un moyen d'injection d'air constitué, par exemple, d'une membrane perméable ou semi-perméable disposée dans la partie inférieure de la zone d'activation et connectée à une pompe commandée pour injecter périodiquement de l'air dans la zone d'activation afin de mettre la masse bactérienne en suspension. En fonctionnement, l'aération est effectuée pendant une période prédéterminée par jour, contrôlée par un processeur de commande.

Les avantages d'une station d'épuration suivant l'invention sont une maintenance réduite et un rendement physico-chimique et bactériologique de 80 à 90 %. De plus, la production de boues activées est réduite de plus de 90 % par suite de l'activité bactérienne qui digère les boues et limite ainsi au maximum la vidange de la station d'épuration.

A titre d'exemple, avec une masse bactérienne de 8 g/l et une aération de 9 heures 45 minutes par jour, le rendement d'une station d'épuration suivant l'invention atteint 84 % environ, y compris le cas échéant l'élimination du phosphore total.

Grâce au fait que le bioréacteur ne demande guère de maintenance, une station d'épuration suivant l'invention peut être installée aisément dans des habitations individuelles ou dans de petits lotissements. De plus, les cuves peuvent être enfouies dans le sol, ce qui ne pose pas de problème d'encombrement important.

L'invention est exposée plus en détails dans ce qui suit à l'aide des dessins joints dans lesquels :
- la figure 1 représente schématiquement en coupe un bioréacteur à oxygénation suivant l'invention;
- la figure 2 illustre une variante d'exécution du bioréacteur suivant l'invention, précédé d'un séparateur de graisse;
- la figure 3 illustre schématiquement un exemple de mode de réalisation d'une station d'épuration suivant l'invention, spécialement prévue pour l'épuration d'eaux chargées en hydrocarbures;
- la figure 4 illustre schématiquement un exemple d'installation prévue pour l'épuration d'effluents chargés en PCB;
- la figure 5 représente schématiquement une variante d'exécution de l'installation illustrée à la figure 4.

L'élément essentiel d'une station d'épuration suivant l'invention est un bioréacteur à oxygénation dans lequel les eaux à traiter sont mises en contact avec une masse bactérienne en présence d'oxygène apporté par injection d'air.

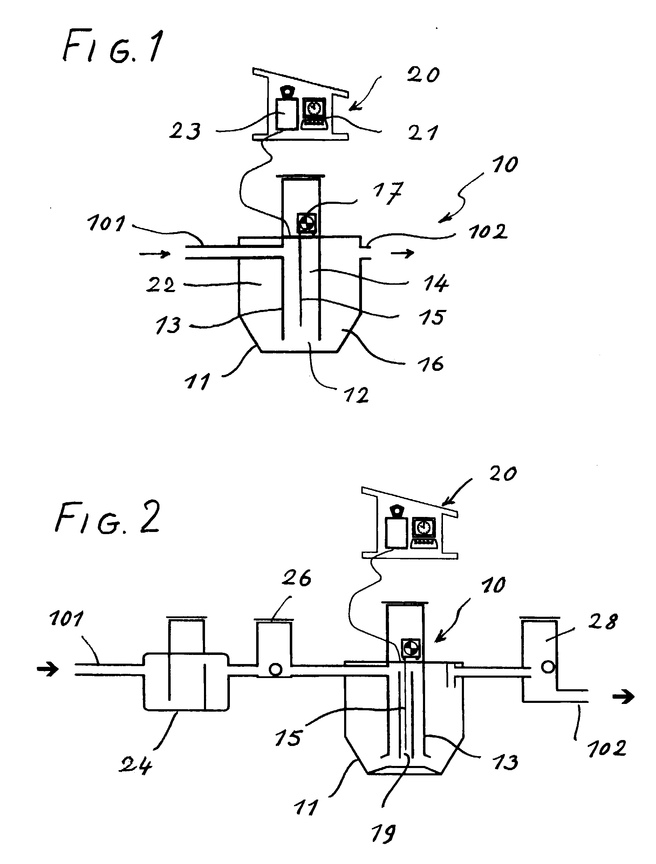

Se reportant à la figure 1, on peut voir que le bioréacteur 10 suivant l'invention est constitué d'une cuve 11 dans laquelle une cloison 13 délimite une zone d'aération 12, une zone de recirculation par effet vortex 14 et une zone de décantation 16 entourant les deux autres zones centrales. La zone d'aération 12 contient un moyen pour injecter de l'air. Dans le mode de réalisation illustré, ce moyen est constitué par une membrane perméable ou semi-perméable 15 suspendue dans la zone d'aération 12 et raccordée à une pompe extérieure 17 avec commande par une armoire de commande 20 à laquelle la pompe est connectée par une ligne électrique (non représentée).

La cuve 11 contient une masse bactérienne 22 constituée d'un mélange de micro-organismes spécifiques et d'enzymes non pathogènes, capable de digérer et liquéfier les matières biodégradables contenues dans les eaux traitées. Celles-ci sont introduites par la conduite 101 débouchant dans l'enceinte délimitée par la cloison 13.

L'injection d'air maintient la masse bactérienne en suspension, ce qui a pour effet d'activer le développement de la flore bactérienne par oxydation et celle-ci se développe jusqu'à épuisement du milieu nutritif, c'est-à-dire les eaux traitées, les matières organiques et les hydrocarbures. L'injection d'air se fait périodiquement; la durée de chaque injection d'air dans la cuve 11 est contrôlée par un processeur 21 prévu dans l'armoire de commande 20.

Un temps de séjour minimum dans la cuve du réacteur est nécessaire pour faciliter les phénomènes d'adsorption et tamponner l'effet de pointe, particulièrement sensible dans les effluents urbains. Dans la zone de décantation 17 s'effectue une séparation de l'eau épurée de la culture bactérienne et du floc. Les eaux épurées sont évacuées par débordement dans la goulotte 102.

Afin de minimiser le volume des boues à recirculer, on procède à des injections périodiques de micro-organismes, ce qui permet ainsi d'alléger la maintenance du réacteur et de diminuer l'intervention manuelle. Le signe de référence 23 sur la figure 1 représente une réserve de micro-organismes avec vanne d'injection commandée périodiquement par le processeur 21.

Grâce au fait que le bioréacteur suivant l'invention ne demande guère de maintenance, une station d'épuration suivant l'invention peut être installée aisément dans des habitations individuelles ou dans de petites communautés. De plus, comme dit plus haut, les cuves peuvent être enfouies dans le sol, ce qui ne pose pas de problème d'encombrement important. Seule l'armoire de commande 20 doit être prévue à un endroit accessible.

Le bioréacteur à oxygénation décrit ci-avant peut être utilisé pour la réalisation de stations d'épuration efficaces.

Avant d'être amenée dans le bioréacteur 10, l'eau à traiter peut subir une pré-épuration dans un séparateur de graisse, un désableur, un déshuileur ou autre. La figure 2 représente un bioréacteur 10 suivant l'invention, précédé d'un séparateur de graisse 24. Dans ce mode de réalisation, le bioréacteur 10 est muni, dans la zone d'aération 12, d'une cheminée 19 pour favoriser l'effet vortex évoqué plus haut afin d'assurer la recirculation des boues. La forme tronconique de la partie inférieure de la cuve 11 et l'aménagement du fond de la cuve favorisent la recirculation des boues. Les signes de référence 26 et 28 désignent des chambres de visite.

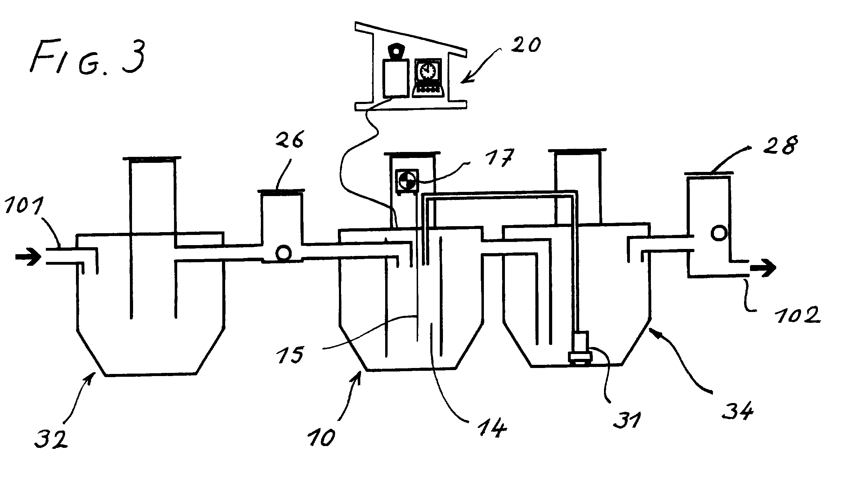

Lorsque les eaux à traiter sont des effluents contenant des hydrocarbures, le bioréacteur suivant l'invention peut être précédé d'une cuve de dégraissage contenant un mélange de micro-organismes spécifiques et d'enzymes non pathogènes spécialement mis au point pour dégrader efficacement et minéraliser les effluents contenant des hydrocarbures et des graisses. Une cuve de décantation peut également être prévue en aval du réacteur afin de parfaire la clarification des eaux épurées avant leur évacuation par la conduite 102. La figure 3 représente une station d'épuration comprenant une cuve de dégraissage 32, un bioréacteur à oxygénation 10 tel que décrit ci-avant et une cuve de décantation 34 en aval du réacteur. Dans la cuve de décantation est représentée une petite pompe 31 pouvant avantageusement être prévue pour recycler vers la zone de recirculation 14 du bioréacteur 10, les boues qui se déposent au fond de la cuve.

Afin d'éliminer l'enveloppe de phosphore totale contenue dans les eaux épurées, le bioréacteur 10 peut également comprendre un moyen pour injecter un composé d'oxyde de fer et de chaux dans une proportion prédéterminée suivant la nature des eaux et de manière à maintenir un pH de réaction supérieur à 9. Ce composé a pour effet d'unir les liaisons chimiques des atomes d'oxyde de fer et de chaux et de catalyser l'élimination des phosphates. Le composé d'oxyde de fer et de chaux précité peut être injecté sous forme liquide ou être ajouté par exemple sous forme de pastilles.

De façon avantageuse, l'oxyde de fer est traité par voie thermique de manière à augmenter le rendement de la réaction et réduire ainsi la quantité d'oxyde de fer utilisée. Cette disposition est surtout destinée à l'épuration des eaux résiduaires de collectivités ayant une charge polluante supérieure à 100 équivalent-habitant ou à l'épuration des eaux industrielles. Par "équivalent-habitant" on entend l'unité de charge polluante résultant de l'activité domestique d'une personne au cours d'une journée, soit la charge polluante représentant la charge organique biodégradable ayant une demande biochimique d'oxygène en cinq jours de 60 grammes par jour.

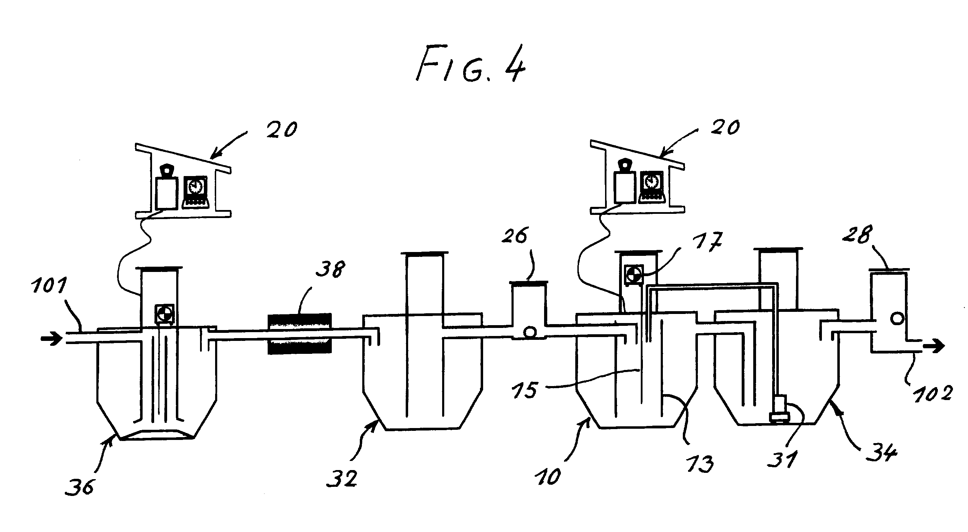

Lorsque les eaux à épurer sont des effluents chargés en polychlorobenzène (PCB), les eaux peuvent d'abord être traitées dans un premier bioréacteur similaire au bioréacteur 10 décrit plus haut, mais dont la cuve contient une masse bactérienne constituée d'un mélange de micro-organismes spécifiques et d'enzymes non pathogènes spécialement choisis pour dégrader efficacement les hydrocarbures et/ou PCB. Une installation de ce genre est représentée à titre d'exemple à la figure 4. On y distingue le premier bioréacteur 36 suivi d'un dispositif à rayonnement UV 38 afin de décontaminer les eaux et/ou les sédiments récoltés à la sortie du bioréacteur 30 et les débarrasser des résidus de PCB. Les eaux débarrassées des résidus de PCB sont alors traitées dans une station d'épuration telle que représentée à la figure 3 par exemple.

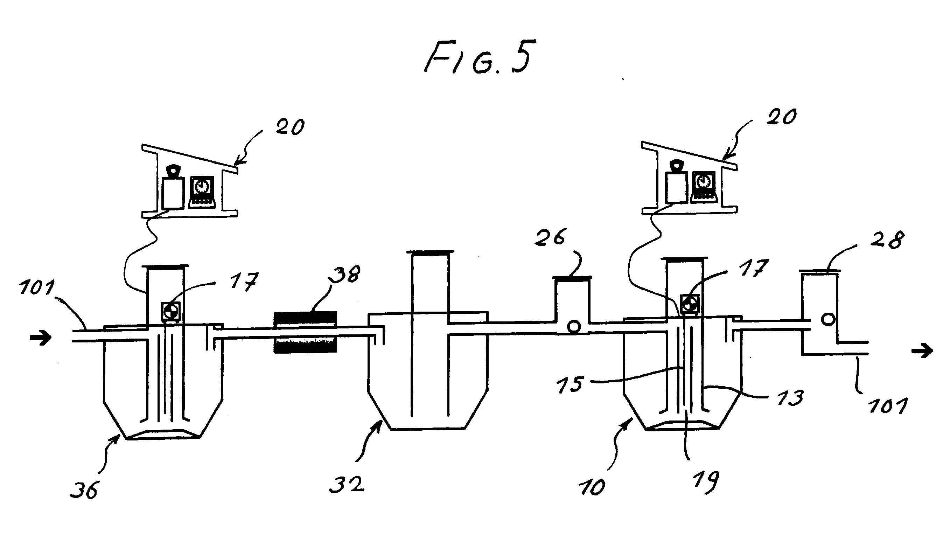

Une variante d'exécution est illustrée à la figure 5. Dans ce mode d'exécution le bioréacteur à oxygénation 10 comporte une cheminée 19 favorisant l'effet vortex pour assurer la recirculation des boues comme dans l'installation illustrée à la figure 2.

Il est bien entendu que la présente invention n'est nullement limitée aux modes de réalisation décrits ci-avant et illustrés sur les dessins et que de nombreuses variantes d'exécution peuvent être conçues par l'homme du métier dans l'esprit de l'invention.

## Revendications

1. Station d'épuration d'eaux comportant un réacteur comprenant une cuve (11) dans laquelle les eaux sont mises en contact avec une masse bactérienne, caractérisée en ce que la cuve (11) comprend une cloison (13) délimitant une zone d'aération (12), une zone de recirculation par effet vortex (14) et une zone de décantation (16), et des moyens (15, 17) pour injecter périodiquement de l'air dans la zone d'aération précitée afin de mettre la masse bactérienne en suspension, de manière à favoriser le développement de la flore bactérienne.

2. Station d'épuration suivant la revendication 1, caractérisée en ce que les moyens d'injection d'air (15) comprennent une membrane perméable ou semi-perméable disposée dans la partie inférieure de la zone d'aération (12) et connectée à une pompe (17).

3. Station d'épuration suivant la revendication 2, caractérisée en ce que la pompe (17) est commandée par un processeur programmé (21).

4. Station d'épuration suivant l'une quelconque des revendications précédentes, caractérisée en ce que le réacteur (10) comporte en outre des moyens (23) pour injecter périodiquement des micro-organismes dans la cuve (11) du réacteur.

5. Station d'épuration suivant l'une quelconque des revendications précédentes, caractérisée en ce que la zone d'aération (12) de la cuve du réacteur comporte une cheminée (19) pour créer l'effet vortex destiné à assurer la recirculation des boues.

6. Station d'épuration suivant l'une quelconque des revendications précédentes, caractérisée en ce que le réacteur (10) est connecté en amont à une cuve de dégraissage (32) dans laquelle les eaux à traiter sont mises en contact avec un mélange de micro-organismes spécifiques et d'enzymes non pathogènes, spécialement adapté pour dégrader les effluents contenant des hydrocarbures et des graisses.

7. Station d'épuration suivant l'une quelconque des revendications précédentes, caractérisée en ce que le réacteur (10) est connecté en aval à une cuve de décantation (34).

8. Station d'épuration suivant la revendication 7, caractérisée en ce que la cuve de décantation (34) comporte une pompe (31) pour recycler les boues vers la zone de recirculation (14) du réacteur (10).

9. Station d'épuration suivant l'une quelconque des revendications précédentes, caractérisée en ce que le réacteur (10) comprend un moyen pour injecter un composé d'oxyde de fer et de chaux dans une proportion prédéterminée, afin de catalyser l'élimination d'une majeure partie du phosphore contenu dans les eaux.

10. Station d'épuration suivant l'une quelconque des revendications précédentes, caractérisée en ce que le réacteur (10) est précédé d'un réacteur similaire (36) dans lequel les eaux à traiter sont mises en contact avec un mélange de micro-organismes spécifiques et d'enzymes non pathogènes spécialement adaptés pour dégrader les hydrocarbures et/ou PCB, suivi d'un tunnel à rayonnement UV (38).
